# EUROPÄISCHE PATENTANMELDUNG

(11) **EP 1 716 905 A1**
(43) Veröffentlichungstag der Anmeldung: **02.11.2006**
(21) Anmeldenummer: 06004790.9
(22) Anmeldetag: 09.03.2006
(51) Int. Cl.: B01D 46/24

(54) **Filteranordnung**

(30) Priorität: 26.04.2005 DE 102005019262
(71) Anmelder: Carl Freudenberg KG, 69469 Weinheim (DE)
(72) Erfinder: Stahl, Ulrich, 69514 Laudenbach (DE); Felber, Uwe, 69518 Absteinach (DE)

(57) **Zusammenfassung**

Filteranordnung (1), umfassend einen als Faltenfilter mit Faltenspitzen (2) und Faltentälern (3) ausgebildeten ersten Filter (4) mit einer Zuluft- (5) und einer Abluftseite (6) und einen auf der Zuluftseite (5) des ersten Filters (4) angeordneten zweiten Filter (7), wobei der erste Filter (4) und der zweite Filter (7) mittels zumindest einer Schweißverbindung (8) miteinander verbunden sind.

## Beschreibung

### Technisches Gebiet

Die Erfindung betrifft eine Filteranordnung, umfassend einen als Faltenfilter mit Faltenspitzen und Faltentälern ausgebildeten ersten Filter mit einer Zuluft- und einer Abluftseite und einen auf der Zuluftseite des ersten Filters angeordneten zweiten Filter sowie ein Verfahren zu deren Herstellung und deren Verwendung.

### Stand der Technik

Derartige Filteranordnungen sind aus der EP 0 411 240 A1 bekannt. Die Filteranordnung ist insbesondere als Motorzuluftfilter zur Filterung staubreicher Motorzuluft geeignet, wie sie beispielsweise im Baustellenbetrieb auftritt. Die vorbekannte Filteranordnung weist einen als faltenförmigen Hauptfilter ausgebildeten ersten Filter auf und einen als Vorfilter ausgebildeten zweiten Filter aus einem Vliesstoff größerer Dicke auf. Die vorbekannte Filteranordnung ist als rohrförmige Filterpatrone ausgebildet, wobei der Vorfilter und der Hauptfilter mittels eines innenumfangsseitigen und eines außenumfangsseitigen Stützringes in ihrer Lage fixiert sind.

### Darstellung der Erfindung

Der Erfindung liegt die Aufgabe zugrunde, die Filteranordnung der eingangs genannten Art derart weiterzuentwickeln, dass die Teilezahl reduziert ist.

Diese Aufgabe wird mit dem Merkmalen von Patentanspruch 1, 9 und 11 gelöst. Auf vorteilhafte Ausgestaltungen nehmen die auf diese Ansprüche rückbezogenen Unteransprüche Bezug.

Zur Lösung der Aufgabe sind der erste Filter und der zweite Filter mittels zumindest einer Schweißverbindung miteinander verbunden. Aufgrund der Schweißverbindung sind der erste und der zweite Filter stoffschlüssig miteinander verbunden und eine Fixierung der beiden Bauteile durch weitere Bauelemente kann entfallen. Insbesondere kann eine Fixierung der beiden Filter durch Stützringe entfallen. Da eine gesonderte Fixierung des ersten und des zweiten Filters nicht erforderlich ist, kann beispielsweise das Umspritzen der Filterkanten mit einem Kunststoff zur Fixierung entfallen. Schweißverbindungen sind zum einen kostengünstig herstellbar und zum anderen im Gegensatz zu Klebeverbindungen gegenüber in die Filteranordnung eindringende Feuchtigkeit resistent. Dadurch ist die Filteranordnung insbesondere für den Einsatz im Baustellenbereich zur Filterung staubreicher und feuchter Motorzuluft geeignet.

Der erste Filter kann aus Vliesstoff gebildet sein. Der erste Filter weist aufgrund der faltenförmigen Struktur eine große Filterfläche auf. Dadurch sind durch den ersten Filter bei geringem Durchflusswiderstand große Luftmengen durchleitbar.

Der zweite Filter kann aus Vliesstoff gebildet sein. Durch die offene Struktur bindet ein aus Vliesstoffes bestehender zweiter Filter insbesondere grobe Staubpartikel sowie eindringende Feuchtigkeit. Der Vliesstoff ist vorzugsweise ein thermoplastisches Kunststoffvlies und kann beispielsweise aus Polyester gebildet sein. In einer weiteren Ausführung kann der zweite Filter aus einem Schaumstoff gebildet sein. Schaumstoffe sind kostengünstig herstellbar und weisen bei entsprechender Ausgestaltung bei einer langen Betriebsdauer einen hohen Abscheidegrad grober Partikel auf.

Der erste Filter kann als Hauptfilter und der zweite Filter kann als Vorfilter ausgebildet sein. Durch die Aufteilung in Vor- und Hauptfilter ergibt sich eine Filteranordnung mit einer hohen Standzeit bei einem gleichzeitig niedrigen Durchflusswiderstand. Der Hauptfilter und weist durch seine dichtere Struktur einen hohen Anfangsabscheidegrad auf. Der Hauptfilter erreicht die maximale Abscheideleistung nach einer gewissen Betriebsdauer, da sich während des Betriebs Partikel in das Filtermaterial einlagern. In dem Vorfilter werden hauptsächlich grobe Partikel zurückgehalten, die insbesondere in staubbelasteten Gegenden wie Baustellen auftreten. Dadurch ergibt sich eine Filteranordnung mit einem hohem Abscheidegrad über eine lange Betriebsdauer.

Die Faltenspitzen und/oder die Faltentäler können verrundet ausgebildet sein. Durch die verrundete Form vereinfacht sich das Einführen der Schweißwerkzeuge in den Filter.

Der zweite Filter kann den ersten Filter entlang der Faltenspitzen oder der Faltentäler des ersten Filters zumindest teilweise anliegend berühren und der erste Filter kann mit dem zweiten Filter an den Anlegestellen zumindest teilweise verschweißt sein. Durch die Vielzahl der über die Filterfläche verteilten verschweißten Berührungsstellen ist die Filteranordnung sehr formstabil und biegesteif.

Die Schweißverbindung kann linienförmig entlang der Faltenspitzen oder der Faltentäler aufgebracht sein. Die linienförmigen Schweißverbindungen erhöhen zusätzlich die Stabilität der Filteranordnung.

Die Schweißverbindung kann punktförmig aufgebracht sein. Derartige Schweißverbindungen sind schnell und kostengünstig herstellbar.

Die Aufgabe wird außerdem durch ein Verfahren zur Herstellung einer Filteranordnung gelöst, wobei ein als Faltenfilter ausgebildeter erster Filter bereitgestellt wird, wobei ein zweiter Filter bereitgestellt wird, wobei der zweite Filter auf der Zuluftseite des ersten Filters angeordnet wird und wobei der erste Filter und der zweite Filter zumindest teilweise verschweißt werden. Die Filteranordnung ist durch die Schweißverbindung unempfindlich gegenüber Feuchtigkeit und durch die stoffschlüssige Verbindung von erstem und zweitem Filter können Bauteile zur Fixierung der beiden Filter entfallen. Schweißverbindungen sind einfach und kostengünstig herstellbar. Das Schweißverfahren ist einfach in den Herstellungsprozess integrierbar. Als Halbzeuge können bereits fertig gestellte Faltenfilter aus Vliesstoff und Filtermatten aus Vliesstoff verwendet werden, da die Verbindung der beiden Bauelemente erst nach deren Herstellung erfolgt.

Der erste Filter und der zweite Filter können mittels Ultraschallschweißen miteinander verschweißt werden. Beim Ultraschallschweißen werden die beiden Filter mit einem kammartigen Stempel auf einer Seite und einem Gegenstempel auf der anderen Seite mit einem Druck von 2 - 5 N/mm² verpresst. Dabei wird einer oder beide Stempel mittels eines Generators in Ultraschallschwingungen versetzt. Diese Ultraschallschwingungen verursachen Relativbewegungen der sich berührenden Filterflächen von erstem und zweitem Filter. Die aus dieser Relativbewegung resultierende Reibungswärme verursacht ein lokales Aufschmelzen der Fasern des Vliesstoffes des Vorfilters, wobei sich die geschmolzenen Fasern irreversibel verbinden. Nach dem Auskühlen ist der erste Filter fest mit dem zweiten Filter verbunden. Dadurch ist das Ultraschallschweißen insbesondere zum stoffschlüssigen Verbinden von Vliesstoff-Werkstoffen geeignet.

Eine weitere Lösung der Aufgabe stellt die Verwendung der erfindungsgemäßen Filteranordnung als Motorzuluftfilter eines Kraftfahrzeugs dar. Durch die Verbindung von erstem und zweiten Filter mittels einer Schweißverbindung ist die Filteranordnung unempfindlich gegenüber Feuchtigkeit. Da die Filteranordnung darüber hinaus zur Filterung staubbelasteter Luft geeignet ist, ist der Filter insbesondere als Motorzuluftfilter eines Baustellenfahrzeugs geeignet. Die erfindungsgemäße Filteranordnung weist darüber hinaus eine geringe Teileanzahl auf.

### Kurzbeschreibung der Zeichnung

Einige Ausführungsbeispiele der erfindungsgemäßen Filteranordnung werden nachfolgend anhand der Figuren 1 bis 4 näher erläutert. Diese zeigen, jeweils schematisch:
- Fig. 1: eine erfindungsgemäße Filteranordnung;
- Fig. 2: die Filteranordnung in der Draufsicht mit linienförmigen Schweißverbindungen;
- Fig. 3: die Filteranordnung in der Draufsicht mit punktförmigen Schweißverbindungen;
- Fig. 4: eine patronenförmige Filteranordnung;
- Fig. 5: eine Filteranordnung mit verrundeten Faltenspitzen.

### Ausführung der Erfindung

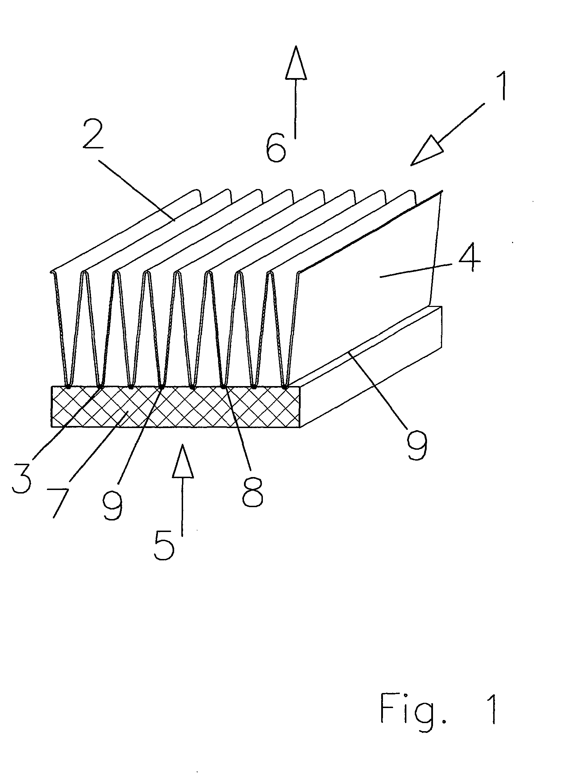

Figur 1 zeigt eine Filteranordnung 1, die sich aus einem ersten Filter 4 und einem zweiten Filter 7 zusammensetzt. In dieser Ausführung ist die Filteranordnung 1 in Form eines quaderförmigen Kassettenfilters ausgeführt. Der erste Filter 4 besteht aus Vliesstoff und ist als Faltenfilter mit Faltenspitzen 2 und Faltentälern 3 ausgebildet und weist eine Zuluft- 5 und eine Abluftseite 6 auf. Der erste Filter 4 bildet den Hauptfilter der Filteranordnung 1. Auf der Zuluftseite 5 des ersten Filters 4 ist der zweite Filter 7 angeordnet der den Vorfilter bildet. Der zweite Filter 7 ist aus Polyester gebildet. In anderen Ausführungen sind auch andere thermoplastischen Werkstoffe einsetzbar, insbesondere kann der zweite Filter 7 aus einem Schaumstoff gebildet sein. Der zweite Filter 7 berührt den ersten Filter 4 entlang der Faltenspitzen 2 des ersten Filters 4 anliegend. An diesen Bereichen, den Berührungsstellen 9, sind der erste 4 und der zweite Filter 7 mittels einer Schweißverbindung 8 miteinander verschweißt. Die Filteranordnung 1 ist insbesondere als Motorzuluftfilter eines Kraftfahrzeugs und hier insbesondere eines Baustellenfahrzeugs ausgebildet. Zur Herstellung der Filteranordnung werden der erste 4 und der zweite Filter 7 bereitgestellt. Der zweite Filter 7 wird auf der Zuluftseite 5 des ersten Filters 4 angeordnet und die beiden Filter 4, 7 werden an den Berührungsstellen 9 mittels Ultraschallschweißen miteinander verschweißt. Die Schweißverbindung 8 kann durch eine durch vorherige Plasmaaktivierung aktivierte Oberfläche verbessert werden.

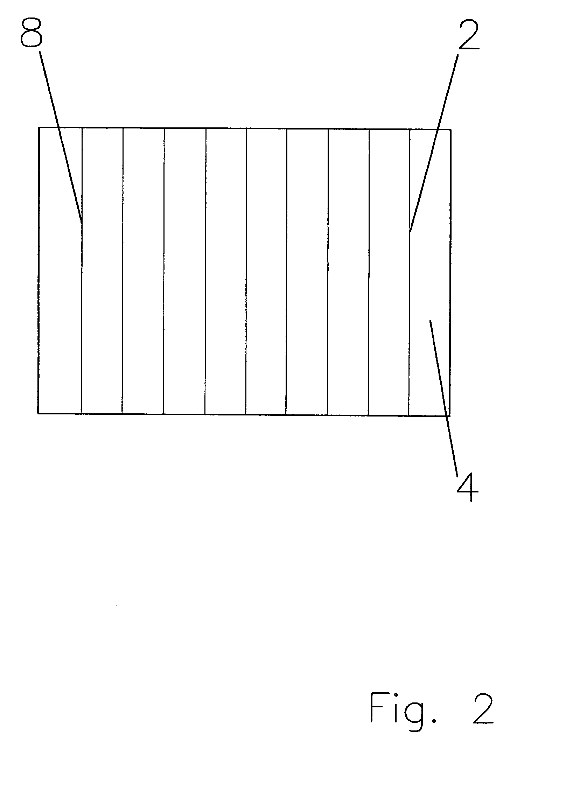

Figur 2 zeigt die Filteranordnung 1 gemäß Figur 1 in der Draufsicht. Die Schweißverbindungen 8 sind in dieser Ausführung linienförmig entlang der Faltenspitzen 2 aufgebracht.

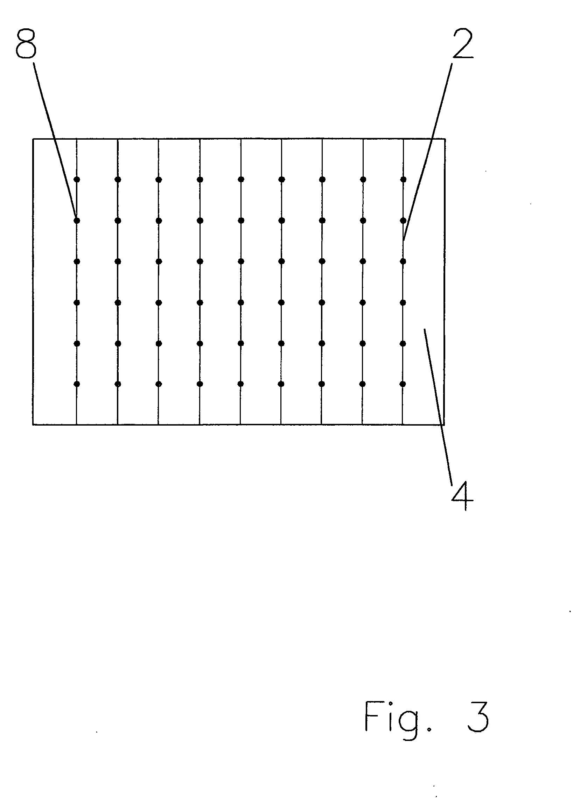

Figur 3 zeigt die Filteranordnung 1 gemäß Figur 1 in der Draufsicht. Die Schweißverbindungen 8 sind in dieser Ausführung punktförmig entlang der Faltenspitzen 2 aufgebracht.

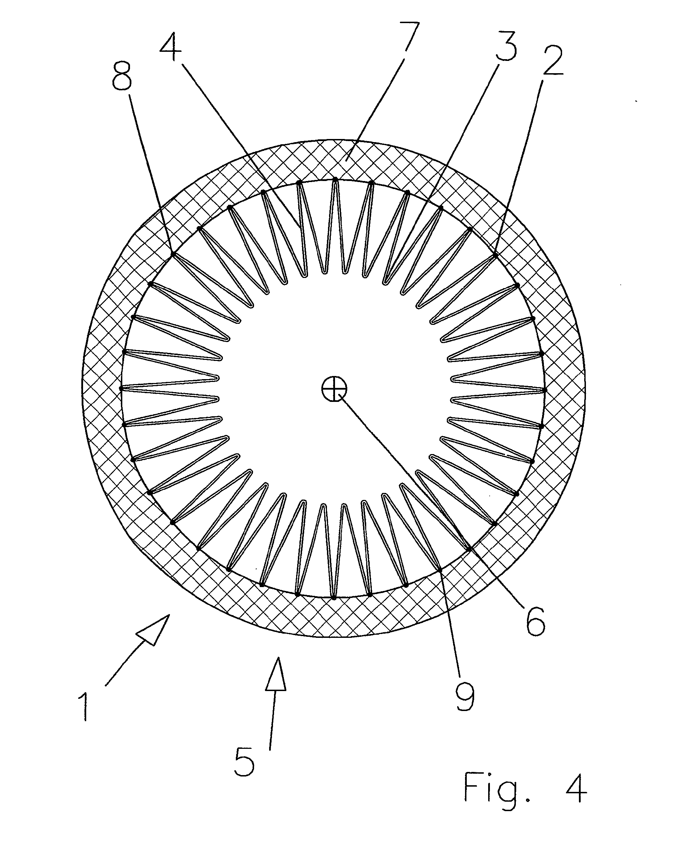

Figur 4 zeigt die Filteranordnung 1 gemäß Figur 1, wobei die Filteranordnung 1 in dieser Ausführung als zylinderförmige Filterpatrone ausgebildet. Die Zuluftseite 5 befindet sich außenumfangsseitig und die Abluftseite 6 befindet sich innenumfangsseitig der Filteranordnung 1. Der zweite Filter 7 ist konzentrisch außenumfangsseitig des ersten Filters 4 angeordnet. Die Filteranordnung 1 ist insbesondere als Motorzuluftfilter eines Kraftfahrzeugs und hier insbesondere eines Baustellenfahrzeugs ausgebildet.

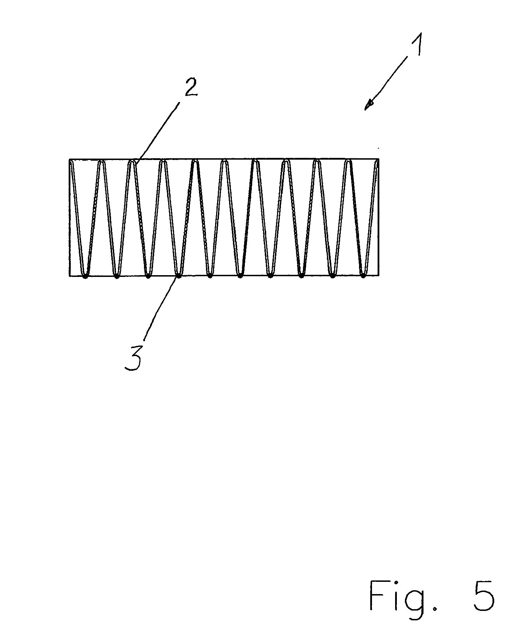

Figur 5 zeigt eine Filteranordnung 1 gemäß Figur 1, wobei die Faltenspitzen 2 und die Faltentäler 3 verrundet ausgebildet sind.

## Patentansprüche

1. Filteranordnung (1), umfassend einen als Faltenfilter mit Faltenspitzen (2) und Faltentälern (3) ausgebildeten ersten Filter (4) mit einer Zuluft- (5) und einer Abluftseite (6) und einen auf der Zuluftseite (5) des ersten Filters (4) angeordneten zweiten Filter (7), **dadurch gekennzeichnet, dass** der erste Filter (4) und der zweite Filter (7) mittels zumindest einer Schweißverbindung (8) miteinander verbunden sind.

2. Filteranordnung nach Anspruch 1, **dadurch gekennzeichnet, dass** der ersten Filter (4) aus einem Vliesstoff gebildet ist.

3. Filteranordnung nach Anspruch 1 oder 2, **dadurch gekennzeichnet, dass** der zweite Filter (7) aus einem Vliesstoff gebildet ist.

4. Filteranordnung nach Anspruch 1 oder 2, **dadurch gekennzeichnet, dass** der zweite Filter (7) aus Schaumstoff gebildet ist.

5. Filteranordnung nach einem der Ansprüche 1 bis 4, **dadurch gekennzeichnet, dass** der erste Filter (4) als Hauptfilter und der zweite Filter (7) als Vorfilter ausgebildet ist.

6. Filteranordnung nach einem der Ansprüche 1 bis 5, **dadurch gekennzeichnet, dass** die Faltenspitzen (2) und/oder die Faltentäler (3) verrundet ausgebildet sind.

7. Filteranordnung nach einem der Ansprüche 1 bis 6, **dadurch gekennzeichnet, dass** der zweite Filter (7) den ersten Filter (4) entlang der Faltenspitzen (2) oder der Faltentäler (3) des ersten Filters (4) zumindest teilweise anliegend berührt und dass der erste Filter (4) mit dem zweiten Filter (7) an den Anlegestellen (9) zumindest teilweise verschweißt ist.

8. Filteranordnung nach Anspruch 7, **dadurch gekennzeichnet, dass** die Schweißverbindung (8) linienförmig entlang der Faltenspitzen (2) oder der Faltentäler (3) aufgebracht ist.

9. Filteranordnung nach Anspruch 7, **dadurch gekennzeichnet, dass** die Schweißverbindung (8) punktförmig aufgebracht ist.

10. Verfahren zur Herstellung einer Filteranordnung (1) gemäß einem der vorherigen Ansprüche, wobei ein als Faltenfilter ausgebildeter erster Filter (4) bereitgestellt wird, wobei ein zweiter Filter (7) bereitgestellt wird, wobei der zweite Filter (7) auf der Zuluftseite (5) des ersten Filters (4) angeordnet wird und wobei der erste Filter (4) und der zweite Filter (7) zumindest teilweise verschweißt werden.

11. Verfahren nach Anspruch 10, **dadurch gekennzeichnet, dass** der erste Filter (4) und der zweite Filter (7) mittels Ultraschallschweißen miteinander verschweißt werden.

12. Verwendung der Filteranordnung (1) nach einem der Ansprüche 1 bis 9 als Motorzuluftfilter eines Kraftfahrzeugs.
